# EUROPÄISCHE PATENTSCHRIFT

(11) **EP 0 706 897 B1**
(45) Veröffentlichungstag und Bekanntmachung des Hinweises auf die Patenterteilung: **17.09.1997**
(21) Anmeldenummer: 95115822.9
(22) Anmeldetag: 07.10.1995
(51) Int. Cl.: B41M 1/30, C08K 3/32

(54) **Verfahren zur Beschriftung von Formkörpern mit Kupferphosphat als Additiv**
Method for marking moulded bodies using copper (II) phosphate as additive
Méthode pour marquage d'objets formés utilisant phosphate de cuivre comme additif

(30) Priorität: 15.10.1994 DE 4436897
(43) Veröffentlichungstag der Anmeldung: 17.04.1996
(73) Patentinhaber: Elastogran GmbH, D-49440 Lemförde (DE)
(72) Erfinder: Welz, Martin, D-67098 Bad Dürkheim (DE); Prissok, Frank, Dr., D-49448 Lemförde (DE)
(74) Vertreter: Karau, Wolfgang, Dr.

(56) Entgegenhaltungen:
- EP-A- 0 327 508
- EP-A- 0 345 032
- EP-A- 0 400 305
- EP-A- 0 542 115

## Beschreibung

Die vorliegende Erfindung betrifft ein Verfahren zur Beschriftung von Formkörpern auf der Basis von Polyurethan-Elastomeren oder Mischungen aus thermoplastischen Polyurethan-Elastomeren mit bis zu 45 Gew.-%, bezogen auf das Gesamtgewicht an Polymeren, weiteren Thermoplasten, mittels energiereicher Strahlung.

Kunststoffe können durch Druckverfahren beschriftet werden. In den letzten Jahren hat sich jedoch die Laserbeschriftung weitgehend durchgesetzt. Die Vorteile liegen in der einfach, schnell und präzise durchführbaren, berührungslosen (weder mechanische Belastung noch Verschmutzung des Werkstücks), flexiblen (rechnergesteuert), sauberen und chemikalienfreien Bearbeitung. Laseranlagen lassen sich problemlos in automatische Fertigungsstraßen integrieren; Kunststoff-Fertigteile können individuell beschriftet werden, weil ein Layout-Wechsel rechnergestützt einfach und schnell möglich ist. Die Beschriftung erfolgt berührungslos auch an schwer zugänglichen Stellen. Gegenüber konventionellen Bedrucktechniken ergeben sich also erhebliche Vorteile.

Die wichtigste Charakterisierungsgröße der erzielten Beschriftung ist die Lesbarkeit, die mit dem Kontrast quantifiziert werden kann. Neben hohem Kontrast sind ausreichende Verfärbungstiefe und eine möglichst glatte Oberfläche gefordert. Die Schrift soll abriebfest und chemikalienbeständig sein.

Damit auf einem Kunststoff-Formkörper eine hochwertige Markierung entsteht, muß die Absorption von Laserlicht eine Farbumschlagreaktion bewirken. Je nach Wellenlänge, eingestrahlter Leistung, Pulslänge etc. sind jeweils unterschiedliche Wechselwirkungen zwischen Laserlicht und Kunststoff dominierend und man unterscheidet daher eine Reihe verschiedener laserinduzierter Mechanismen, die zu einer dauerhaften Markierung führen: Thermochemische Reaktion, Karbonisierung der Oberfläche, Aufschmelzen, Umschmelzen, Verdampfen, Sublimation, Gravieren, Verfärbung, Aufschäumen, photochemische Reaktion, Ablation (Materialabtrag), Ausbleichen von Farbstoffen, Entfernung einer Überzugsschicht.

Beim Laserbeschriften unterscheidet man zwei Verfahren, das Masken(Projektions-) und das Strahlablenkungsbeschriften (Scannen des Laserstrahls). Beim Maskenbeschriften werden gepulste Laser eingesetzt. Ein Laserstrahl mit hinreichend großer Apertur beleuchtet eine Maske, die die gesamte zu übertragende Information enthält. Die Maske wird mit einer Linse auf die zu beschriftende Oberfläche abgebildet, die Information kann mit einem einzigen Laserpuls auf das Werkstück aufgebracht werden. Bei großen Bildern kann die Maske mit mehreren Pulsen abgescannt werden. Die maximale Größe des Beschriftungsfeldes wird durch die notwendige Energiedichte beschränkt. Das Projektionsverfahren erlaubt damit schnelle Beschriftungen; da eine Maske erstellt werden muß, ist es jedoch nicht so flexibel. Bei der Strahlablenkungsbeschriftung wird der Laserstrahl über zwei bewegliche Spiegel und eine Planfeldlinse auf das zu beschriftende Werkstück gelenkt.

Zum Einsatz kommen bisher überwiegend nur der CO₂-Laser (10.6 µm Wellenlänge) und besonders der Nd:YAG-Laser (1.06 µm) bzw. der frequenzverdoppelte Nd:YAG-Laser (532 nm). Oft ist allerdings der Aosorptionskoeffizient der zu bearbeitenden Kunststoffe bei diesen Wellenlängen nicht hoch genug, um einen Farbumschlag im polymeren Material zu induzieren. Daher werden üblicherweise dem Kunststoff bei dessen Herstellung geeignete Hilfs- und Füllstoffe zugesetzt, die bei der verwendeten Wellenlänge stark absorbieren und die aufgenommene Energie an die umgebende Polymermatrix übertragen (z.B. Zusatz sensibilisierender Farbstoffe in Form von Pigmenten, Zusatz von toxischen Arsen- oder Cd-Verbindungen, Zugabe geeigneter Monomere bei der Copolymerisation, Beschichten des Substrats mit speziellen Lack- und Farbfilmen, Tinten etc.) Bekannt ist die Einlagerung von Ruß oder von Antimontrioxid in thermoplastische Elastomere. Spezielle Kunststoffadditive mit hohem Absorptionsvermögen, insbesondere für die Wellenlänge des Nd:YAG-Lasers, ermöglichen Markierungen mit hohem Kontrast, guter Konturschärfe und guter Abriebfestigkeit (C. Herkt-Maetzky, Kunststoffe 81 (1991) 4). Weitere Verfahren arbeiten mit strahlungsempfindlichen ausbleichbaren Zusatzstoffen (und evtl. zusätzlichen, weniger strahlungsempfindlichen nicht verfärbbaren Verbindungen). Durch Bestrahlung werden dann die strahlungsempfindlichen Farbstoffe zerstört und an den bestrahlten Stellen verbleibt dann die Hintergrund- oder Komplementärfarbe der Polymermatrix und es entsteht eine visuelle bunte Kontrastmarkierung. Solche Farbumschläge führen zu guten Kontrasten (EP 327508). Kunststoffe, die handelsübliche farbige Pigmente enthalten, lassen sich mit dem frequenzverdoppelten Nd:YAG-Laser teilweise beschriften, da eine große Zahl von Pigmenten und Farbstoffen bei 532 nm absorbiert. Die Pigmente werden ausgebleicht mit der Folge eines Farbumschlags. Durch Zusatz von modifizierten Glimmerpigmenten können Formmassen hergestellt werden, die mit dem CO₂-Laser beschriftbar sind (C. Herkt-Maetzky, Kunststoffe 81 (1991) 4). Beschrieben wurde auch ein Verfahren, bei dem auf einem Trägermaterial Pigmente aufgebracht sind, die mit Hilfe des Lasers auf thermischem Wege in die Oberfläche eingeschmolzen werden (Plastverarbeiter 38 (1987) 64).

In der EP-A 400 305 werden mit Laserlicht beschriftbare hochpolymere Materialien beschrieben, welche als Additiv Cu(II)hydroxidphosphat enthalten.

Kunststoffe zu dotieren, ist aufwendig. Die zugesetzten Füllstoffe können die Materialeigenschaften des Kunststoffes negativ beeinflussen. So können Additive zum Verbessern der Beschriftbarkeit häufig nicht beabsichtigte Nebenwirkungen wie verminderte Festigkeit des Werkstoffs oder unerwünschte Farben beim Einsatz von Pigmenten zur Folge haben. Daher wurde nach speziellen lasersensiblen Additiven gesucht, die, in den Kunststoff eingearbeitet, andere anwendungstechnische Werkstoffeigenschaften nicht beeinflussen. Die Sensibilisierung erfolgt jedoch oft nur für eine Wellenlänge, auf die das System optimiert wurde.

Aufgabe der vorliegenden Erfindung war es daher, ein Verfahren zur Beschriftung von Formkörpern auf der Basis von thermoplastischen Kunststoffen zur Verfügung zu stellen, welches die vorstehend beschriebenen Nachteile nicht aufweist und die Erstellung dauerhafter kontrastreicher Schriften auf technisch einfach zu realisierende Weise ermöglicht.

Diese Aufgabe wird erfindungsgemäß durch ein Verfahren gemäß Oberbegriff des Anspruchs 1 gelöst, wobei als Additiv zur Verbesserung der Beschriftbarkeit ein Cu-Phosphat, vorzugsweise zusammen mit einem anorganischen Schichtsilikat, eingesetzt wird.

Die beim erfindungsgemäßen Verfahren eingesetzte energiereiche Strahlung hat im allgemeinen eine Wellenlänge im Bereich von 150 bis 1500, vorzugsweise im Bereich von 150 - 1100 nm.

Beispielsweise seien hier CO₂-Laser (10600 nm = 10,6 µm) und Nd:YAG-Laser erwähnt (1064 bzw. 532 nm) oder gepulste UV-Laser erwähnt, wobei insbesondere, letzter Excimerlaser mit folgenden Wellenlängen sind:
- F₂-Excimerlaser: 157 nm
- ArF-Excimerlaser: 193 nm
- KrCl-Excimerlaser: 222 nm
- KrF-Excimerlaser: 248 nm
- XeCl-Excimerlaser: 308 nm
- XeF-Excimerlaser: 351 nm
sowie frequenzvervielfachte Nd:YAG-Laser mit Wellenlängen von 355 nm (frequenzverdreifacht) oder 266 nm (Frequenzvervierfacht).

Besonders bevorzugt werden Nd:YAG-Laser (1064 bzw. 532 nm), KrF-Laser (248 nm) und XeCl-Laser (308 nm).

Die Energiedichten der eingesetzten Laser liegen im allgemeinen im Bereich von 0,3 mJ/cm² bis 50 J/cm² vorzugsweise 0,5 mJ/cm² bis 20 J/cm² und besonders bevorzugt 1 mJ/cm² bis 10 J/cm².

Bei der Verwendung von gepulsten Lasern liegt die Pulsfrequenz im allgemeinen im Bereich von 0,1 bis 10 000, vorzugsweise von 0,5 bis 5000 und insbesondere von 1 bis 1000 Hz und die Pulslängen (Zeitdauer der einzelnen Pulse) im Bereich von 0,1 bis 1000, vorzugsweise von 0,5 bis 500 und besonders bevorzugt von 1 bis 100 ns.

Abhängig von der Energiedichte des verwendeten Lasers, der Pulslängen und der Art des bestrahlten Formkörpers reichen zur Erzielung guter Beschriftungen im allgemeinen 1 bis 20000, vorzugsweise 1 bis 5000 und insbesondere 1 bis 3000 Pulse aus.

Entsprechende Laser, die im erfindungsgemäßen Verfahren eingesetzt werden können, sind kommerziell erhältlich.

Excimerlaser sind besonders gut geeignet für die Projektion (Maskenverfahren). Es ist aber auch möglich, den Strahl mit beweglichen Spiegeln zu führen (Scannen). Mit homogenem Strahlquerschnitt ist die Bestrahlung einer Maske von etwa 2 cm x 2 cm möglich. Durch Verwendung geeigneter Optiken kann der Strahlquerschnitt aber auch weiter aufgeweitet werden.

Mit Excimerlasern kann schon mit nur einem Puls gut beschriftet werden (bei entsprechend angepaßter Energiedichte), so daß im Vergleich zu Nd:YAG-Lasern auch sehr schnelle Beschriftungen herstellbar sind. Bei der Serienfertigung von Spritzgußteilen z.B. muß die Beschriftungszeit kleiner als die Spritzgußzeit (< ca. 30 s) geteilt durch die Anzahl der Formnester sein. Daraus folgt, daß in diesen Fällen die spritzgegossenen Formen mit hohen Geschwindigkeiten beschriftet werden müssen. Solche hohen Geschwindigkeiten sind mit dem Nd:YAG-Laser teilweise nicht möglich, sondern nur mit 1-Puls-Maskenbeschuß erreichbar.

Noch höhere Anforderungen an die Beschriftungsgeschwindigkeit stellen kontinuierliche Prozesse wie z.B. die Profilextrusion mit Materialgeschwindigkeiten von mehreren m/s. Hierfür reichen selbst hohe Schreibgeschwindigkeiten von Nd:YAG-Lasern nicht mehr aus.

Als Strahlungsquellen können weiterhin auch kontinuierliche UV-Lampen wie Hg-, Xe oder Deuteriumlampen eingesetzt werden. Auch derartige Produkte sind kommerziell erhältlich.

Nach dem erfindungsgemäßen Verfahren werden Formkörper auf der Basis von thermoplastische Polyurethan-Elastomere oder Mischungen von thermoplastischen Polyurethan-Elastomeren mit bis zu 45 Gew.-%, bezogen auf den Gesamtpolymeranteil, anderen Polymeren beschriftet.

Thermoplastische Polyurethan-Elastomere (nachstehend mit "TPU" bezeichnet) bestehen im allgemeinen aus einer Weichphase aus höhermolekularen Polyhydroxylverbindungen, z.B. aus Polyester- oder Polyethersegmenten, und einer Hartphase aus Urethangruppen, gebildet aus niedermolekularen Kettenverlängerungsmitteln und Polyisocyanaten. In analoger Weise enthalten Polyetheramide eine Polyether-Weichphase und eine Polyamid-Hartphase.

TPU werden üblicherweise durch Reaktion einer vorgefertigten, höhermolekularen, im wesentlichen linearen Polyhydroxylverbindung mit einem organischen Diisocyanat und einem niedermolekularen Kettenverlängerungsmittel nach dem sogenannten one-shot- oder Prepolymer-Verfahren in einer geeigneten Vorrichtung hergestellt. Je nach chemischer Struktur und Reaktivität der verwendeten Ausgangsstoffe, der angewandten Reaktionstemperatur und der davon abhängigen Reaktionsgeschwindigkeit können TPU mit einer mehr oder weniger stark ausgeprägten blockweisen Bindung der Weich- und Hartsegmente erhalten werden. Eine gut ausgebildete Blockstruktur bewirkt bei TPU u.a. eine hohe Elastizität. Wird die Blockstruktur beispielsweise durch zu hohe Reaktionstemperaturen oder zu lange Reaktionszeiten negativ beeinflußt, so führt dies zu einem Abfall der mechanischen Eigenschaften des TPU.

Bevorzugte TPU können beispielsweise hergestellt werden durch Umsetzung von
a) organischen, vorzugsweise aromatischen Diisocyanaten, insbesondere 4,4'-Diphenylmethan-diisocyanat, mit
b) mindestens einer höhermolekularen Polyhydroxylverbindung, vorzugsweise einer im wesentlichen difunktionellen Polyhydroxylverbindung mit einem Molekulargewicht von 500 bis 8000, insbesondere Polyalkylenglykolpolyadipaten mit 2 bis 6 C-Atomen im Alkylenrest und Molekulargewichten von 500 bis 6000 oder Polyoxytetramethylen-glykol mit einem Molekulargewicht von 500 bis 3200 und
c) mindestens einem niedermolekularen Kettenverlängerungsmittel, zweckmäßigerweise mit einem Molekulargewicht unter 400, vorzugsweise mit einem Molekulargewicht von 60 bis 300, insbesondere Butandiol-1,4
in Abwesenheit oder vorzugsweise Gegenwart von
d) Katalysatoren und gegebenenfalls
e) Zusatzstoffen
bei erhöhten Temperaturen.

Zu den TPU-Aufbaukomponenten (a) bis (c) und gegebenenfalls (d) und/oder (e) ist folgendes auszuführen:
a) als organische Diisocyanate (a) kommen beispielsweise aliphatische, cycloaliphatische und vorzugsweise aromatische Diisocyanate in Betracht. Im einzelnen seien beispielhaft genannt: aliphatische Diisocyanate, wie Hexamethylen-diisocyanat-1,6, 2-Methyl-pentamethylen-diisocyanat-1,5, 2-Ethyl-2-butyl-pentamethylen-diisocyanat-1,5, 2-Ethyl-butylen-diisocyanat-1,4 oder Mischungen aus mindestens zwei der genannten aliphatischen Diisocyanate, cycloaliphatische Diisocyanate, wie Isophoron-diisocyanat, 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethandiisocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat, 4,4'-, 2,4'- und 2,2'-Diphenylmethan-diisocyanat, Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanato-diphenylethan-1,2 und Gemische aus 4,4'-, 2,4'- und/oder 2,2'-Diisocyanato-diphenylethan-1,2, vorteilhafterweise solche mit einem 4,4'-Diisocyanato-diphenylethan-1,2-Gehalt von mindestens 95 Gew.-%. Vorzugsweise verwendet werden Diphenylmethan-diisocyanat-Isomerengemische mit einem 4,4'-Diphenylmethan-diisocyanatgehalt von größer als 96 Gew.-% und insbesondere im wesentlichen reines 4,4'-Diphenylmethan-diisocyanat.
   Die organischen Diisocyanate können gegebenenfalls in untergeordneten Mengen, z.B. in Mengen bis zu 3 Mol-%, vorzugsweise bis zu 1 Mol-%, bezogen auf das organische Diisocyanat, durch ein tri- oder höherfunktionelles Polyisocyanat ersetzt werden, wobei dessen Mengen jedoch so begrenzt werden muß, daß noch thermoplastisch verarbeitbare Polyurethane erhalten werden. Eine größere Menge an derartigen mehr als difunktionellen Isocyanaten wird zweckmäßigerweise durch die Mitverwendung von weniger als difunktionellen Verbindungen mit reaktiven Wasserstoffatomen ausgeglichen, so daß eine zu weitgehende chemische Vernetzung des Polyurethans vermieden wird. Beispiele für mehr als difunktionelle Isocyanate sind Mischungen aus Diphenylmethan-diisocyanaten und Polyphenylpolymethylen-polyisocyanaten, sog. Roh-MDI sowie flüssige, mit Isocyanurat-, Harnstoff-, Biuret-, Allophanat-, Urethan- und/oder Carbodiimidgruppen modifizierte 4,4'- und/oder 2,4'-Diphenylmethan-diisocyanate.
   Als geeignete monofunktionelle Verbindungen mit reaktivem Wasserstoffatom, die auch als Molekulargewichtsregler verwendbar sind, seien z.B. genannt: Monoamine wie z.B. Butyl-, Dibutyl-, Octyl-, Stearyl-, N-Methylstearylamin, Pyrrolidon, Piperidin und Cyclohexylamin, und Monoalkohole wie z.B. Butanol, Amylalkohol, 1-Ethylhexanol, Octanol, Dodecanol, Cyclohexanol und Ethylenglykolmonoethylether.
b) Als höhermolekulare Polyhydroxylverbindungen (B) mit Molekulargewichten von 500 bis 8000 eignen sich vorzugsweise Polyetherole und insbesondere Polyesterole. In Betracht kommen jedoch auch andere hydroxylgruppenhaltige Polymere mit Ether- oder Estergruppen als Brückenglieder, beispielsweise Polyacetale, wie Polyoxymethylene und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung. Die Polyhydroxylverbindungen müssen zumindest überwiegend linear, d.h. im Sinne der Isocyanatreaktion difunktionell aufgebaut sein. Die genannten Polyhydroxylverbindungen können als Einzelkomponenten oder in Form von Mischungen zur Anwendung kommen.
   Geeignete Polyetherole können nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das vorzugsweise 2 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.
   Geeignete Alkylenoxide sind beispielsweise 1,3-Propylenoxid, 1,2- bzw. 2,3-Butylenoxid und vorzugsweise Tetrahydrofuran, Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure und/oder Glutarsäure, N-Alkyl-dialkanolamine, wie z.B. N-Methyl- und N-Ethyl-diethanolamin und vorzugsweise zweiwertige, gegebenenfalls Etherbrücken gebunden enthaltende Alkohole, wie z.B. Ethandiol, Propandiol-1,2 und -1,3, Butandiol-1,4, Diethylenglykol, Pentandiol-1,5, Hexandiol-1,6, Dipropylenglykol, 2-Methylpentandiol-1,5 und 2-Ethyl-butandiol-1,4. Die Startermoleküle können einzeln oder als Gemische eingesetzt werden.
   Vorzugsweise verwendet werden Polyetherole aus 1,2-Propylenoxid und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist. Derartige Polyetherole können erhalten werden, indem man z.B. an das Startermolekül zunächst das 1,2-Propylenoxid und daran anschließend das Ethylenoxid polymerisiert oder zunächst das gesamte 1,2-Propylenoxid im Gemisch mit einem Teil des Ethylenoxids copolymerisiert und den Rest des Ethylenoxids anschließend anpolymerisiert oder schrittweise zunächst einen Teil des Ethylenoxids, dann das gesamte 1,2-Propylenoxid und dann den Rest des Ethylenoxids an das Startermolekül anpolymerisiert.
   Sehr gut geeignet sind insbesondere die hydroxylgruppenhaltigen Polymerisationsprodukte des Tetrahydrofurans, die Polyoxytetramethylen-glykole.
   Die im wesentlichen linearen Polyetherole besitzen Molekulargewichte von 500 bis 8000, vorzugsweise 600 bis 6000 und insbesondere 800 bis 3500, wobei die Polyoxytetramethylen-glykole bevorzugt Molekulargewichte von 500 bis 3200 insbesondere von 600 bis 2200 aufweisen. Die Polyetherole können sowohl einzeln als auch in Form von Mischungen untereinander zur Anwendung kommen.
   Geeignete Polyesterole können beispielsweise aus Dicarbonsäuren mit 2 bis 12, vorzugsweise 4 bis 6 Kohlenstoffatomen und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Dicarbonsäuremono- oder -diester mit 1 bis 4 Kohlenstoffatomen im Alkoholrest, Dicarbonsäureanhydride oder Dicarbonsäuredichloride zu verwenden. Beispiele für mehrwertige Alkohole sind Alkandiole mit 2 bis 10, vorzugsweise 2 bis 6 Kohlenstoffatomen, wie Ethandiol, Propandiol-1,3, Butandiol-1,4, Pentandiol-1,5, Hexandiol-1,6, Decandiol-1,10, 2,2-Dimethylpropandiol-1,3, Propandiol-1,2 und Dialkylenglykole, wie z.B. Diethylenglykol und Dipropylenglykol. Je nach den gewünschten Eigenschaften können die mehrwertigen Alkohole allein oder gegebenenfalls in Mischungen untereinander verwendet werden.
   Geeignet sind ferner Polyester der Kohlensäure mit den genannten mehrwertigen Alkoholen, insbesondere Alkandiolen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.
   Als Polyesterole vorzugsweise verwendet werden Polyalkylenglykolpolyadipate mit 2 bis 6 C-Atomen im Alkylenrest, wie z.B. Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone.
   Die Polyesterole besitzen Molekulargewichte von 500 bis 6000, vorzugsweise von 800 bis 3500.
c) Als Kettenverlängerungsmittel (c) mit Molekulargewichten kleiner als 400, vorzugsweise 60 bis 300, kommen vorzugsweise Alkandiole mit 2 bis 12 Kohlenstoffatomen, vorzugsweise mit 2, 4 oder 6 Kohlenstoffatomen und/oder Alkylenglykole, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4 und Hydroxyalkylenether des Hydrochinons, wie z.B. 1,4-Di-(b-hydroxyethyl)-hydrochinon sowie Polytetramethylenglykole mit Molekulargewichten von 162 bis 378.
   Zur Einstellung von Härte und Schmelzindex können die Aufbaukomponenten in relativ breiten molaren Verhältnissen variiert werden, wobei die Härte und die Schmelzviskosität mit zunehmendem Gehalt an Kettenverlängerungsmittel (c) ansteigt, während der Schmelzindex abnimmt.
   Zur Herstellung von weicheren TPU, z.B. solchen mit einer Härte Shore A von kleiner als 95, vorzugsweise von 95 bis 75 Shore A, können beispielsweise die im wesentlichen difunktionellen Polyhydroxylverbindungen (Bb) und Alkandiole (c) vorteilhafterweise in Molverhältnissen von 1:1 bis 1:5, vorzugsweise 1:1,5 bis 1:4,5 verwendet werden, so daß die resultierenden Mischungen aus (b) und (c) ein Hydroxyläquivalentgewicht von größer als 200, und insbesondere von 230 bis 450 besitzen, während zur Herstellung von härteren TPU (B), z.B. solchen mit einer Härte Shore A von größer als 98, vorzugsweise von 55 bis 75 Shore D, die Molverhältnisse von (b):(c) im Bereich von 1:5,5 bis 1:15, vorzugsweise von 1:6 bis 1:12 liegen, so daß die erhaltenen Mischungen aus (b) und (c) ein Hydroxyläquivalentgewicht von 110 bis 200, vorzugsweise von 120 bis 180 aufweisen.
d) Die TPU können in Abwesenheit und vorzugsweise in Gegenwart von Katalysatoren (d) hergestellt werden. Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethyl-piperazin, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren, wie z.B. Dibutylzinndiacetat, Dibutylzinndilaurat oder ähnliche. Die Katalysatoren werden üblicherweise in Mengen von 0,001 bis 0,1 Gew.-Teilen pro 100 Gew.-Teilen der Mischung aus Polyhydroxylverbindungen (Bb) und Kettenverlängerungsmittel (c) eingesetzt.

Neben Katalysatoren (d) können den Aufbaukomponenten auch Zusatzstoffe (Be) einverleibt werden. Genannt seien beispielsweise Gleitmittel, Inhibitoren, Stabilisatoren gegen Hydrolyse, Licht, Hitze oder Verfärbung, Flammschutzmittel, Farbstoffe, Pigmente, anorganische und/oder organische Füllstoffe und Verstärkungsmittel.

Die Zusatzstoffe (e) können hierzu in die Aufbaukomponenten oder in die Reaktionsmischung zur Herstellung der TPU eingebracht werden.

Sofern zu den verwendbaren Zusatzstoffen nachfolgend keine näheren Angaben gemacht werden, können diese der Fachliteratur, beispielsweise der Monographie von J.H. Saunders und K.C. Frisch "High Polymers", Band XVI, Polyurethane, Teil 1 und 2 (Verlag Interscience Publishers 1962 bzw. 1964), dem Kunststoff-Handbuch, Band 7, Polyurethane, 1. und 2. Auflage (Carl Hanser Verlag, 1966 bzw. 1983) oder der DE-A 29 01 774 entnommen werden.

Zur Herstellung der TPU werden die Aufbaukomponenten (a), (b) und (c) vorzugsweise in Gegenwart von Katalysatoren (d) und gegebenenfalls Zusatzstoffen (e) im allgemeinen in solchen Mengen zur Reaktion gebracht, daß das Äqivalenzverhältnis von NCO-Gruppen der Diisocyanate zur Summe der Hydroxylgruppen der Komponenten (b) und (c) im Bereich von 0,90:1 bis 1,20:1, vorzugsweise 0,99:1 bis 1,07:1 und insbesondere 1,00:1 bis 1,05:1 liegt.

Die TPU können z.B. hergestellt werden nach dem Extruder- oder vorzugsweise Bandverfahren durch batchweises oder kontinuierliches Mischen der Aufbaukomponenten (Ba) bis (Bc) sowie gegebenenfalls (Bd) und/oder (Be), Ausreagierenlassen der Reaktionsmischung im Extruder oder auf einem Trägerband bei Temperaturen von 60 bis 250°C, vorzugsweise 70 bis 150°C und anschließendes Granulieren der erhaltenen TPU (B). Gegebenenfalls kann es zweckmäßig sein das erhaltene TPU (B) vor der Weiterverarbeitung bei 80 bis 120°C, vorzugsweise 100 bis 110°C über einen Zeitraum von 1 bis 24 Stunden zu tempern.

Die TPU werden, wie bereits ausgeführt wurde, bevorzugt nach dem Bandverfahren hergestellt. Hierzu werden die Aufbaukomponenten (a) bis (c) und gegebenenfalls (d) und/oder (e) bei Temperaturen oberhalb des Schmelzpunktes der Aufbaukomponenten (a) bis (c) mit Hilfe eines Mischkopfes kontinuierlich gemischt. Die Reaktionsmischung wird auf einen Träger, vorzugsweise ein Förderband z.B. aus Metall, aufgebracht und mit einer Geschwindigkeit von 1 bis 20 m/Minute, vorzugsweise von 4 bis 10 m/Minute durch eine temperierte Zone von 1 bis 20 m, vorzugsweise von 3 bis 10 m Länge geführt. Die Reaktionstemperatur in der temperierten Zone beträgt 60 bis 200°C, vorzugsweise 80 bis 180°C. In Abhängigkeit vom Diisocyanatanteil in der Reaktionsmischung wird die Reaktion durch Kühlen oder Heizen so gesteuert, daß mindestens 70 %, vorzugsweise mindestens 80 % der Isocyanatgruppen der Diisocyanate umgesetzt werden und die Reaktionsmischung bei der gewählten Reaktionstemperatur erstarrt. Aufgrund der freien Isocyanatgruppen im erstarrten Reaktionsprodukt werden TPU mit einer sehr niedrigen Schmelzviskosität bzw. einem hohen Schmelzindex erhalten.

Die TPU können auch mit anderen Polymeren in Mischung vorliegen, wobei der Gewichtsanteil der anderen Polymeren bis zu 45, vorzugsweise bis zu 35 Gew.-%, bezogen auf das Gesamtgewicht an Polymeren betragen kann.

In Frage kommen dabei vor allem solche Polymeren, die in Mischung mit TPU eine Variation der Eigenschaften der Mischung erlauben, um gezielt ein bestimmtes Eigenschaftsprofil einzustellen. Entsprechende Polymere wie auch deren Mischungen mit TPU sind dem Fachmann an sich bekannt und in der Literatur beschrieben, so daß sich hier nähere Angaben erübrigen. Zur Verbesserung der Beschriftbarkeit können den Formmassen, die zur Herstellung der erfindungsgemäß zu beschriftenden Formkörper eingesetzt werden, Additive zugegeben werden, die die Absorption bei der verwendeten Laserwellenlänge erhöhen. Hier sind insbesondere UV-Absorber zu nennen.

Als Additive zur Verbesserung der Beschriftbarkeit enthalten die nach dem erfindungsgemäßen Verfahren zu beschriftenden Formkörper ein Kupferphosphat, insbesondere ein CU(II)hydroxidphosphat.

Besonders bevorzugt ist ein Produkt, wie es durch Erhitzen von blauem Cu(II)orthophosphat (Cu₃(PO₄)₂·3 H₂O durch Erhitzen auf 100 bis 200°C entsteht und die chemische Summenformel 4CuO·P₂O₅·H₂O oder Cu₃(PO₄)₂·Cu(OH)₂ aufweist. Dabei handelt es sich um ein grünliches Kristallpulver.

Weitere geeignete Kupferphosphate sind 6CuO·P₂O₅·3H₂O oder Cu₃(PO₄)₂·3Cu(OH)₂, 5CuO·P₂O₅·3H₂O oder Cu₃(PO₄)₂·2Cu(OH)₂·H₂O, 4CuO·P₂O₅, 4CuO·P₂O₅·3H₂O, 4CuO·P₂O₅·1,5H₂O, 4CuO·P₂O₅·1,2H₂O Die Menge an Kupferphosphat unterliegt an sich keiner besonderen Beschränkung, liegt aber im allgemeinen im Bereich von 0,02 bis 5 Gew.-%, vorzugsweise 0,05 bis 0,5 und insbesondere 0,05 bis 0,18 Gew.-%, bezogen auf das Gesamtgewicht an Polymer.

Dabei hat es sich als technisch vorteilhaft erwiesen, das Additiv in Form eines Konzentrates in thermoplastischem Polyurethan, vorzugsweise Polyetherpolyurethan zuzugeben, welches einen Anteil an Cu-(II)phosphat von 5 bis 80, vorzugsweise 10 bis 75 Gew.-% aufweist. Die Konzentrate lassen sich auf den üblichen Kunststoffverarbeitungsmaschinen herstellen, wobei Kneter und Zweiwellenextruder zur Herstellung bevorzugt werden.

Gemäß einer bevorzugten Ausführungsform wird neben dem Kupferphosphat noch ein anorganisches Schichtsilikat zugesetzt, wodurch sich insgesamt ein synergistischer Effekt ergibt. Geeignete Schichtsilikate sind Glimmer, Talkum, Glas, Kaolin und SiO₂-Flakes oder deren Mischungen.

Besonders geeignete Schichtsilikate sind Glimmer, Talkum, Glas, Kaolin und SiO₂-Flakes oder deren Mischungen. Bevorzugt werden gemahlene Glimmer mit einer Korngröße kleiner als 500 µm, besonders kleiner als 100 µm, eingesetzt. Besonders bevorzugt werden weiterhin beschichtete Glimmer eingesetzt, die auf einen Silikatkern aufbauend einen Mantel aus TiO₂, SiO₂, SnO₂ oder den leitfähig dotierten Verbindungen besitzen.

Das Mischungsverhältnis Kupferphosphat zu Schichtsilikat unterliegt an sich keiner besonderen Beschränkung und beträgt im allgemeinen 10:90 bis 90:10, vorzugsweise 70:30 bis 30:70.

Die Zugabe des Schichtsilikats erfolgt vorzugsweise zusammen mit dem Phosphat über das zuvor erwähnte Konzentrat, prinzipiell ist aber auch die seperate Zugabe möglich.

Neben Kupferphosphaten und ggf. Glimmer können auch weitere Additive, die üblicherweise zur Beschriftung von Formkörpern mit Lasern eingesetzt werden, zur Anwendung kommen, erforderlich ist die Zugabe weiterer Additive jedoch nicht.

### Beispiele

### Beispiel 1

Es wurden weiße Spritzgußkörper aus einem thermoplastischen Polyether-Polyurethan der Shore Härte 90A, auf der Basis von 1000 Teilen Polytetrahydrofuran mit einem Molekulargewicht von 1000, 700 Teilen MDI und 162 Teilen Butandiol-1,4, hergestellt, die 1 % TiO₂, 0,1 % Cu₃(PO₄)₂·Cu(OH)₂ und 0,15 % Glimmer enthalten. Die Zusatzstoffe wurden in Form von Konzentraten in Polyether TPU vor dem Abspritzvorgang zugegeben. Die Beschriftung erfolgte mit einem Nd:YAG-Laser bei einer Wellenlänge von 1064 nm, einem Lampenstrom von 15 Ampere, einer Impulsfrequenz von 4 kHz und einer Schreibgeschwindigkeit von 500 mm/sec.

### Beispiel 2

Wie Beispiel 1, aber mit 0,2 % Cu₃(PO₄)₂·Cu(OH)₂ und 0,2 % zinnoxidbeschichtetem Glimmer.

### Beispiel 3

Wie Beispiel 1, aber nur mit 0,15 % Cu₃(PO₄)₂·Cu(OH)₂.

### Beispiel 4

Wie Beispiel 1, aber mit 0,15 % Cu₃(PO₄)₂·Cu(OH)₂ und 0,2 % zinnoxidbeschichtetem Glimmer.

### Beispiel 5

Wie Beispiel 1, aber mit 0,2 % Cu₃(PO₄)₂·3 Cu(OH)₂ und 0,2 % zinnoxidbeschichtetem Glimmer.

### Beispiel 6

Wie Beispiel 1, aber mit 0,2 % 4 CuO·P₂O₅·1,5 H₂O und 0,2 % zinnoxidbeschichtetem Glimmer.

### Beispiel 7

Es wurden gelbe Spritzgußkörper aus einem thermoplastischen Polyether-Polyurethan der Shore Härte 85A, auf der Basis von 1000 Teilen Polytetrahydrofuran mit einem Molekulargewicht von 1000, 600 Teilen MDI und 126 Teilen Butandiol-1,4, hergestellt, die 0,6 % Titandioxid und 0,25 % Chinophthalongelb (Paloithol K 0961) enthielten, als Zusatzstoffe (Laserabsorber) wurden 0,18 % Cu₃(PO₄)₂·Cu(OH)₂ und 0,15 % Glimmer (< 100 µm) eingesetzt.

### Beispiel 8

Es wurden weiße Spritzgußkörper mit 1 % Titandioxid aus einem Polyester-Polyurethan der Shore-Härte 90A, auf der Basis von 1000 Teilen Butyl-hexyl-Adipat mit einem Molekulargewicht von 2000, 580 Teilen MDI und 162 Teilen Butandiol-1,4, hergestellt. Als Laserabsorber wurden 0,15 % Cu₃(PO₄)₂·Cu(OH)₂ und 0,5 % Glimmer eingesetzt.

### Beispiel 9

Wie Beispiel 1, aber Beschriftung mit einem XeF-Eximer-Laser bei einer Wellenlänge von 351 nm mit 30 Pulsen/sec. und einer Energiedichte von 300 mJ/cm².

### Beispiel 10

Es wurden weiße Extrusionskörper aus einem Blend aus 89 % eines thermoplastischen Polyether-Polyurethan der Shore-Härte 85A, auf der Basis von 1000 Teilen Polytetrahydrofuran mit einem Molekulargewicht von 1000, 600 Teilen MDI und 126 Teilen Butandiol-1,4, 10 % eines schlagzähen Polystyrol und 1 % Titandioxid hergestellt. Als Laserabsorber wurden 0,2 % Cu₃(PO₄)₂·Cu(OH)₂ und 0,2 % beschichteter Glimmer eingesetzt. Die Beschriftung erfolgte mit einem Nd:YAG-Laser bei 1064 nm, einer Stromstärke von 19 Ampere, einer Impulsfrequenz von 5 kHz und einer Schreibgeschwindigkeit von 600 mm/sec.

### Vergleichsbeispiel 1

Wie Beispiel 1, aber ohne zusätzliche Laserabsorber.

### Vergleichsbeispiel 2

Wie Beispiel 1, aber mit 5 % Antimontrioxid als Laserabsorber (Stand der Technik).

**Tabelle**

| Beispiel | Reflexion Untergrund | Reflexion Schrift | Aufschäumen | Kontrast | Kantenschärfte | Gesamturteil | Barcode lesbar |
|---|---|---|---|---|---|---|---|
| 1 | 81 % | 33 % | nein | 3 | 3 | 3 | ja |
| 2 | 77 % | 26 % | nein | 2 | 2 | 2 | ja |
| 3 | 75 % | 36 % | nein | 4 | 3 | 3 | ja |
| 4 | 62 % | 19 % | nein | 1 | 1 | 1 | ja |
| 5 | 71 % | 29 % | kaum | 3 | 2 | 2 | ja |
| 6 | 77 % | 31 % | kaum | 3 | 2 | 2 | ja |
| 7 | 71 % | 30 % | nein | 3 | 3 | 3 | ja |
| 8 | 64 % | 21 % | kaum | 3 | 2 | 2 | ja |
| 9 | 81 % | 18 % | nein | 1 | 1 | 1 | ja |
| 10 | 77 % | 25 % | nein | 2 | 3 | 2 | ja |
| Vergleich 1 | 70 % | keine | Beschriftung | möglich | - | 6 | nein |
| Vergleich 2 | 45 % | 14 % | kaum | 4 | 3 | 3 | ja |
| Beurteilungsscala: 1 = sehr gut; 6 = sehr schlecht | | | | | | | |

## Patentansprüche

1. Verfahren zur Beschriftung von Formkörpern auf der Basis von thermoplastischen Polyurethan-Elastomeren oder Mischungen aus thermoplastischen Polyurethan-Elastomeren mit bis zu 45 Gew.-%, bezogen auf das Gesamtgewicht aus Polymeren, weiteren Thermoplasten, mittels energiereicher Strahlung, dadurch gekennzeichnet, daß als Additiv zur Verbesserung der Beschriftbarkeit ein Kupferphosphat eingesetzt wird.

2. Verfahren nach Anspruch 1, dadurch gekennzeichnet, daß als Quelle der energiereichen Strahlung ein gepulster UV-Laser oder ein Nd:YAG-Laser verwendet wird.

3. Verfahren nach Anspruch 1, dadurch gekennzeichnet, daß als Quelle der energiereichen Strahlung kontinuierliche UV-Lampen verwendet werden.

4. Verfahren nach einem der Ansprüche 1 bis 3, dadurch gekennzeichnet, daß die thermoplastischen Polyurethan-Elastomere oder deren Mischungen mit anderen Polymeren zur Verbesserung der Beschriftbarkeit ein Kupferphosphat in Mischung mit einem anorganischen Schichtsilikat enthalten.

5. Beschriftete Formkörper, hergestellt nach dem Verfahren gemäß einem der Ansprüche 1 - 4.

## Claims

1. A process for the inscription of moldings based on thermo-plastic polyurethane elastomers or mixtures of thermoplastic polyurethane elastomers with up to 45 % by weight, based on the total weight of polymers, of further thermoplastics, by means of high-energy radiation, wherein the additive employed to improve the inscribability is a copper phosphate.

2. A process as claimed in claim 1, wherein the high-energy radiation source used is a pulsed UV laser or an Nd:YAG laser.

3. A process as claimed in claim 1, wherein the high-energy radiation source used is a continous UV lamp.

4. A process as claimed in any of claims 1 or 3, wherein the thermoplastic polyurethane elastomer or mixture thereof with other polymers contains a copper phosphate mixed with an inorganic phyllosilicate in order to improve the inscribability.

5. An inscribed molding produced by a process as claimed in any of claims 1 to 4.

## Revendications

1. Procédé pour munir d'une inscription des corps moulés à base d'élastomères thermoplastiques de polyuréthanne ou de mélanges élastomères thermoplastiques de polyuréthanne avec d'autres matières thermoplastiques jusqu'à concurrence de 45% en poids, rapportés au poids total des polymères, au moyen d'un rayonnement riche en énergie, caractérisé en ce qu'on met en oeuvre comme additif pour améliorer leur aptitude à les munir d'une inscription, un phosphate de cuivre.

2. Procédé selon la revendication 1, caractérisé en ce qu'on utilise comme source du rayonnement riche en énergie, un laser UV en régime pulsé ou encore un laser Nd:YAG.

3. Procédé selon la revendication 1, caractérisé en se qu'on utilise comme source du rayonnement riche en énergie, des lampes UV en continu.

4. Procédé selon l'une quelconque des revendications 1 à 3, caractérisé en ce que les élastomères thermoplastiques de polyuréthanne ou leurs mélanges avec d'autres polymères contiennent, pour améliorer leur aptitude à les munir d'une inscription, un phosphate de cuivre an mélange avec un silicate stratifié inorganique.

5. Corps moulés munis d'une inscription, préparés conformément au procédé selon l'une quelconque des revendications 1 à 4.
